Europäisches Patentamt

(19) European Patent Office

Office européen des brevets

(11) **EP 1 060 360 B1**

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(21) Anmeldenummer: **98966398.4**

(22) Anmeldetag: **22.12.1998**

(51) Int Cl.$^7$: **G01D 5/14**, G01R 33/07, G01L 1/18

(86) Internationale Anmeldenummer:
**PCT/EP98/08412**

(87) Internationale Veröffentlichungsnummer:
**WO 99/45342 (10.09.1999 Gazette 1999/36)**

(54) **MAGNETFELDKOMPENSIERTE SENSORANORDNUNG ZUR KRAFTMESSUNG MIT HALL- ODER FELDEFFEKTELEMENTEN**

MAGNETIC FIELD COMPENSATED SENSOR ARRANGEMENT FOR FORCE MEASUREMENT WITH HALL OR FIELD-EFFECT ELEMENTS

DISPOSITIF DE CAPTEURS DE MESURE DE FORCE COMPENSE PAR UN CHAMP MAGNETIQUE AVEC UN ELEMENT A EFFET DE HALL OU DE CHAMP

(84) Benannte Vertragsstaaten:
**AT BE CH DE FR GB IE IT LI LU MC**

(30) Priorität: **03.03.1998 DE 19808929**

(43) Veröffentlichungstag der Anmeldung:
**20.12.2000 Patentblatt 2000/51**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **DORSCH, Bernd**
  **D-91364 Unterleinleiter (DE)**
• **HOHE, Hans-Peter**
  **D-91332 Heiligenstadt (DE)**
• **SEITZER, Dieter**
  **D-91054 Erlangen (DE)**

(74) Vertreter: **Schoppe, Fritz, Dipl.-Ing. et al Schoppe, Zimmermann & Stöckeler Patentanwälte Postfach 71 08 67 81458 München (DE)**

(56) Entgegenhaltungen:
EP-A1- 0 035 103          US-A- 4 875 011
US-A- 5 406 202

• ELECTRONICS WEEK, Band 58, Nr. 17, April 1985, TECHNOLOGY READOUT, "SENSORS.IMPROVED HALL DEVICES FIND NEW USES"

**Beschreibung**

Die vorliegende Erfindung bezieht sich auf eine Sensoranordnung zum Detektieren einer zu erfassenden Größe und insbesondere eine solche Sensoranordnung, deren Ausgangssignal bezüglich eines Hall-Spannungsstöranteils kompensiert ist.

Der Hall-Effekt ist ein in der Technik gut bekanntes Phänomen, das auf der Lorentz-Kraft beruht. Durch diese Lorentz-Kraft werden Elektronen, die einen Leiter normalerweise geradlinig durchlaufen, senkrecht zur Strom- und Feld-Richtung abgelenkt. Somit stellt sich beispielsweise in einer Platte, die von einem Strom durchflossen wird und in einem Magentfeld angeordnet ist, an zwei gegenüberliegenden Seiten eine unterschiedliche Elektronenkonzentration ein, wodurch eine Querspannung entsteht, die als Hall-Spannung bezeichnet wird. Bekannte Hall-Generatoren und Hall-Sensoren nutzen diesen Effekt aus. Bei diesen bekannten Vorrichtungen wird der Hall-Effekt positiv genutzt.

Es gibt jedoch Anwendungen, bei denen durch den Hall-Effekt ein Störanteil eines Nutzsignals bewirkt wird. Ein solcher Störanteil überlagert das Nutzsignal und kann somit beispielsweise bei Sensoren, deren Ausgangssignal von dem Hall-Effekt beeinflußt sein kann, eine Verfälschung des Meßergebnisses darstellen. Eine solche Verfälschung des Meßergebnisses stellt selbstverständlich eine Ungenauigkeit dar und kann Fehlfunktionen von Vorrichtungen, deren Betrieb auf diesen Meßergebnissen basiert, bewirken.

Die DE 43 02 342 A1 bezieht sich auf eine Sensoranordnung zur Magnetfeldmessung, wobei in Figur 2 dieser Schrift eine Hall-Element-Anordnung gezeigt ist, bei der vier Hall-Elemente jeweils um 90° zueinander gedreht vorgesehen sind.

Diese Anordnung dient jedoch nicht dazu, Hall-Spannungsstöranteile zu beseitigen, da die Hall-Spannung als Nutzsignal dient. Vielmehr dient diese Verschaltung dazu, Offsets aufgrund von Inhomogenitäten des Materials des Hall-Elements, aufgrund von Abbildungsverzerrungen von der Konstruktionszeichnung zum fertigen Hall-Element und aufgrund einer mechanischen Belastung auf das Hall-Element zu beseitigen.

Die EP 0727 644 A1 bezieht sich auf eine Sensoranordnung, bei der der Hall-Effekt zur Erfassung einer Meßgröße verwendet wird. Diese Anordnung dient zur berührungsfreien Erfassung der Drehzahl eines rotierenden Zahnrades, bei der zwei Hallsensoren in einer Differentialschaltung betrieben werden, wobei die Hall-Sensoren zur Unterdrückung von Störsignalen um 90° versetzt zueinander angeordnet sind. Es ist ein Permanentmagnet vorgesehen, der die Hall-Elemente stets einem Magnetfeld aussetzt, so daß eine Änderung des Magnetfeldes, die durch die Drehung eines Zahnrades bewirkt wird, durch die Hallelemente erfaßt werden kann. Somit dient die Anordnung zweier Hall-Elemente dazu, durch mechanische Spannungen hervorgerufene störende Piezoeffekte zu kompensieren. Daher wird somit die Hall-Spannung als Nutzsignal verwendet.

Die Fachveröffentlichung Design- und Elektronik 12, 11. Juni 1996, Seiten 47 bis 49 bezieht sich auf Hall-Sensoren und insbesondere auf mittels der CMOS-Technologie gefertigte Hall-Sensoren.

Die US 4875011 A bezieht sich auf eine Anordnung von Hallelementen, bei der der Hall-Effekt zur Erzeugung von Nutzsignalen verwendet wird, während piezoresistive Effekte, die zu einer Verfälschung des Nutzsignals führen, kompensiert werden.

Die EP 0035103 A1 zeigt ein Verfahren zur Kompensation von Piezoeffekten in einem Halbleiterbauelement, wobei das Halbleiterbauelement eine Hall-Sensoranordnung, die aus zwei um 90° zueinander gedrehten Hall-Sensoren besteht, aufweist. Dabei dienen durch einen Hall-Effekt erzeugte Signale als Nutzsignale zur Erfassung eines Magnetfelds, wobei der Sinn der Anordnung der zwei Hallelemente darin liegt, das Nutzsignal verfälschende Piezoeffekte zu kompensieren.

Aus Electronics Week, Band 58, Nr. 17, April 1985, Technology Readout, 'Sensors. Improved Hall Devices Find New Uses', bezieht sich ebenfalls auf eine orthogonale Anordnung von Hallelementen, um somit die Wirkungen einer Belastung auf einen Hall-Sensor zu kompensieren.

Die Aufgabe der vorliegenden Erfindung besteht nun darin, eine Sensoranordnung zum Detektieren einer zu erfassenden Kraft bzw. eines zu erfassenden Drehmoments zu schaffen, deren Ausgangssignal im wesentlichen frei von Hall-Spannungsstöranteilen ist.

Diese Aufgabe wird durch eine Sensoranordnung gemäß Anspruch 1 gelöst.

Die vorliegende Erfindung schafft eine Sensoranordnung zum Detektieren einer zu erfassenden Kraft oder eines zu erfassenden Drehmoments, die aus zumindest zwei im wesentlichen gleichartigen Sensorelementen besteht. Die Sensorelemente erzeugen jeweils ansprechend auf die zu erfassende Kraft oder das zu erfassende Drehmoment ein Ausgangssignal, wobei diese Ausgangssignale der Sensorelemente einen Hall-Spannungsstöranteil und einen durch die Kraft oder das Drehmoment erzeugten Signalanteil aufweisen. Die beiden Sensorelemente sind um 90° gedreht zueinander angeordnet. Eine Einrichtung zur Subtraktion der beiden Ausgangsignale zum Erzeugen eines Sensorsignals ist vorgesehen, bei dem die Hall-Spannungsstöranteile im wesentlichen kompensiert sind und die durch die Kraft oder das Drehmoment erzeugten Signalanteile addiert sind.

Vorzugsweise basieren die Ausgangssignale der beiden Sensorelemente auf einer von der zu erfassenden Größe abhängigen Spannung, der eine Hall-Störspannung überlagert ist, wobei die Sensorelemente dann derart angeordnet sind, daß die von der zu erfassenden Größe abhängige Spannung und die Hall-Störspannung bei dem einen Sensorelement die gleiche Polarität aufweisen, während dieselben bei dem anderen Sensorelement eine entgegengesetzte Polarität aufweisen. Dies wird erreicht, indem die beiden Sensorelemente bezüglich der Richtung, in der die von der zu erfassenden Größe abhängige Spannung erzeugt wird, um 90° zueinander gedreht angeordnet sind. Die Hall-Spannungsstöranteile können dann kompensiert werden, indem die beiden Ausgangssignale von den Sensorelementen voneinander subtrahiert werden.

Bei bevorzugten Ausführungsbeispielen der vorliegenden Erfindung sind die zumindest zwei Sensorelemente auf einem gemeinsamen Träger angeordnet.

Die Sensoranordnung gemäß der vorliegenden Erfindung besitzt im Vergleich zu Einzelsensoren eine doppelte Empfindlichkeit bei einer gleichzeitigen Erhöhung des Signal/Rausch-Abstands um den Faktor $\sqrt{2}$. Um eine noch weitere Verbesserung der Sensoreigenschaften, d.h. der Empfindlichkeit bzw. des Signal/Rausch-Abstandes zu liefern, können mehrere Sensorpaare auf einem Chip realisiert werden, die jeweils in der erfindungsgemäßen Art und Weise beispielsweise auf einem gemeinsamen Chip realisiert sind.

Bevorzugte Ausführungsbeispiele der vorliegenden Erfindung werden nachfolgend bezugnehmend auf die beiliegenden Zeichnungen näher erläutert. Es zeigen:

Fig. 1    eine schematische Ansicht eines Sensorelements zur Verwendung bei einem bevorzugten Ausführungsbeispiel der erfindungsgemäßen Sensoranordnung; und

Fig. 2    eine schematische Darstellung des bevorzugten Ausführungsbeispiels der erfindungsgemäßen Sensoranordnung.

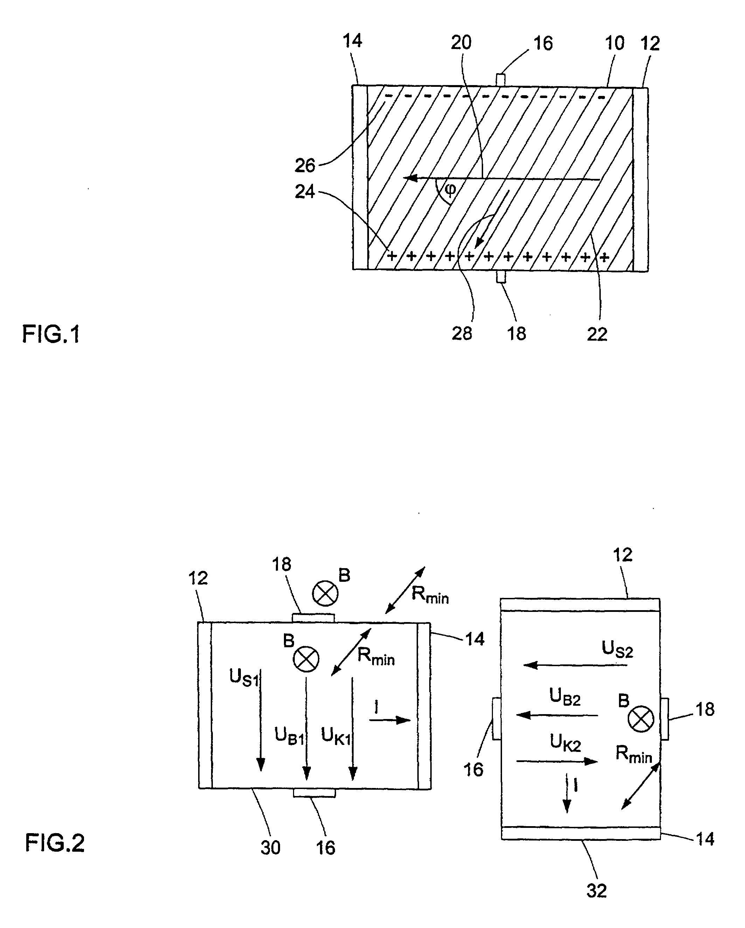

Bezugnehmend auf Fig. 1 wird nachfolgend zunächst der Aufbau eines bei der vorliegenden Erfindung vorteilhaft zu verwendenden Sensorelements erläutert.

Ein solches Sensorelement weist ein dotiertes Halbleitergebiet 10 mit einer im wesentlichen rechteckigen Form auf. An zwei gegenüberliegenden Seitenflächen des Halbleitergebiets 10 sind Elektroden 12 und 14 vorgesehen, die als Steuerkontakte dienen. Wie in der Figur dargestellt ist, sind die Steuerkontakte 12 und 14 beabstandet voneinander angeordnet, wobei das Halbleitergebiet 10 zwischen denselben angeordnet ist. Elektroden 16 und 18, die als Sensorelektroden dienen, sind auf sich ebenfalls gegenüberliegenden Seitenflächen des Halbleitergebiets 10 angeordnet. Bei dem dargestellten Sensorelement sind die Seitenflächen, auf denen sich die Sensorkontakte 16 und 18 befinden, zu den Seitenflächen, auf denen sich die Steuerkontakte 12 und 14 befinden, in einem Winkel von im wesentlichen 90° angeordnet. Somit verbinden die Seitenflächen, auf denen die Sensorkontakte 16 und 18 angeordnet sind, die Seitenflächen, auf denen die Steuerkontakte 12 und 14 angeordnet sind.

Nachfolgend wird die Funktionsweise des in Fig. 1 dargestellten Sensorelements erläutert.

Die zwei gegenüberliegenden Steuerkontakte 12 und 14 werden mit einer geeigneten Steuerspannung oder einem geeigneten Steuerstrom betrieben, um einen Stromfluß durch das dotierte Halbleitergebiet 10 zu bewirken. Dieser Stromfluß ist durch den Pfeil 20 in der Figur angezeigt. Wirkt nun eine Kraft auf das Halbleitergebiet 10 ein, entsteht in dem Halbleitergebiet parallel zur Dilationsrichtung, d.h. der Richtung, in der die Atomabstände durch eine Krafteinwirkung vergrößert werden, eine Richtung eines niedrigeren Widerstands, die bei einer geeigneten Ausrichtung eine Ablenkung des durch das Halbleitergebiet 10 fließenden Stroms 20 bewirkt. Die Dilationsrichtung hängt dabei von der Richtung der auf das Halbleitergebiet einwirkenden Kraft sowie der Art dieser Kraft ab. In der Figur sind bei 22 die Linien des geringeren Widerstands dargestellt.

Durch die Ablenkung des Stromflusses 20 in dem Halbleitergebiet 10 werden an den Rändern des Halbleitergebiets 10, an denen die Sensorkontakte 16 und 18 angebracht sind, Ladungen 24 und 26 erzeugt. Beispielsweise werden an der Seite des Sensorkontakts 18 positive Ladungen 24 erzeugt, während an der Seite des Sensorkontakts 16 negative Ladungen 26 erzeugt werden. Die angestrebte Stromrichtung zur Erzeugung dieser Ladungen 24 und 26 ist bei 28 dargestellt und verläuft entlang der Linien geringeren Widerstands 22.

Die an den Rändern des Halbleitergebiets 10 erzeugten Ladungen 24 und 26 können über die Sensorkontakte 16 und 18 als Spannungsdifferenz und somit als Ausgangssignal des erfindungsgemäßen Kraft/Drehmomentsensors abgegriffen werden. Der zwischen der ursprünglichen Stromrichtung 20 und der Dilationsrichtung, die durch die Linien geringeren Widerstands 22 dargestellt ist, gebildete Winkel φ beeinflußt die Größe des Ausgangssignals. Der Effekt ist bei einem Winkel φ von 45° am größten, während derselbe bei einer Annäherung an 0° oder 90° gegen Null geht. Die Beaufschlagbarkeit des Halbleitergebiets mit einer Kraft wird daher vorteilhaft derart gewählt, daß der Winkel φ zwischen der Dilationsrichtung des Halbleitergebiets und dem Stromfluß im wesentlichen 45° beträgt. Somit ist eine möglichst große Empfindlichkeit erreichbar.

Alternativ zu dem oben bezugnehmend auf Fig. 1 erläuterten Beispiel könnte ein solches Sensorelement auch mittels eines Feldeffekttransistors realisiert werden. Dabei ist das Halbleitergebiet durch den Kanal des Feldeffekttransistors gebildet. Die Drain-Elektrode und die Source-Elektrode bilden die beiden Steuerkontakte. Über diese Steuerkontakte sowie die Gate-Elektrode des Feldeffekttransistors wird ein geeigneter Drainstrom erzeugt. Ferner sind an gegenüberliegenden Längsseiten des Kanalgebiets zusätzlich Sensorkontakte angebracht.

In Fig. 2 ist ein bevorzugtes Ausführungsbeispiel der erfindungsgemäßen Sensoranordnung, die aus zwei Sensorelementen 30 und 32 besteht, dargestellt. Die Sensorelemente 30 und 32 weisen die bezugnehmend auf Fig. 1 beschriebene Form auf.

Um bei einer Messung von Kräften mittels eines piezoresistiven Kraftsensors, wie er in Fig. 1 gezeigt ist, den Einfluß von Magnetfeldern, der durch den Hall-Effekt bewirkt wird, zu kompensieren, sind die zwei derartigen Sensoren 30 und 32 um 90° gedreht zueinander angeordnet. In den beiden Sensorelementen 30 und 32 wird über die Kontaktelektrode 12 und 14 derselben jeweils ein Stromfluß I erzeugt. Wie oben bezugnehmend auf Fig. 1 erläutert wurde, hat das Ausüben einer Kraft auf die beiden Sensorelemente zur Folge, daß in dem Halbleitergebiet derselben parallel zur Dilationsrichtung eine Richtung niedrigeren Widerstands, die in Fig. 2 durch $R_{min}$ dargestellt ist, erzeugt wird. Dies hat eine Signalspannung $U_{K1}$ in dem Sensorelement 30 und eine Signalspannung $U_{K2}$ in dem Sensorelement 32 zur Folge.

Wie in Fig. 2 dargestellt ist, sind die beiden Sensorelemente 30 und 32 einem Magnetfeld B ausgesetzt. Dieses Magnetfeld B erzeugt zusammen mit dem Stromfluß I durch die Halbleitergebiete der Sensorelemente einen Hall-Effekt, der eine Hall-Spannung $U_{B1}$ in dem Sensorelement 30 und eine Hall-Spannung $U_{B2}$ in dem Sensorelement 32 zur Folge hat. Diese Hall-Spannung überlagert sich zu der Signalspannung der Sensorelemente. Die resultierende Ausgangsspannung, die jeweils über die Sensorkontakte 16 und 18 abgegriffen werden kann, ist bei dem Sensorelement 30 mit $U_{S1}$ und bei dem Sensorelement 32 mit $U_{S2}$ bezeichnet.

Bei dem Sensorelement 30 weisen die Signalspannung $U_{K1}$ und die Hall-Spannung $U_{B1}$ die gleiche Polarität auf. Im Gegensatz dazu weisen bei dem Sensorelement 32 aufgrund der Drehung desselben von 90° bezüglich des Sensorelements 30 die Signalspannung $U_{K2}$ und die Hall-Spannung $U_{B2}$ eine unterschiedliche Polarität auf.

Um nun eine Kompensation des Hall-Spannungsstöranteils, der in den Ausgangssignalen $U_{S1}$ und $U_{S2}$ enthalten ist, zu bewirken, werden nun diese Ausgangssignale $U_{S1}$ und $U_{S2}$ der beiden Einzelsensoren voneinander subtrahiert, wodurch sich die von dem Magnetfeld B erzeugten Anteile $U_{B1}$ und $U_{B2}$ in dem Sensorausgangssignal, das die erfaßte Größe darstellt, auslöschen. Dieses Sensorausgangssignal berechnet sich wie folgt:

$$U_{ges} = U_{S1} - U_{S2} = (U_{B1} + U_{K1}) - (U_{B2} - U_{K2}) = 2U_K$$

wobei $U_{B1} = U_{B2}$ und $U_K = U_{K1}$ und $U_{K2}$.

Die 90°-Drehung der beiden Sensorelemente zueinander bewirkt, daß sich die Lage zwischen der Dilationsrichtung Rmin und dem Stromverlauf I in den beiden Elementen um 90° unterscheidet. Dadurch ergeben sich für die durch die Krafteinwirkung erzeugten Anteile $U_{K1}$ und $U_{K2}$ im Ausgangssignal unterschiedliche Vorzeichen, was bei der oben erläuterten nachfolgenden Subtraktion der Signale eine Addition der Beträge von $U_{K1}$ und $U_{K2}$ zur Folge hat. Somit besitzt die erfindungsgemäße Sensoranordnung, die aus zumindest zwei in der dargelegten Weise angeordneten Sensorelementen besteht, im Vergleich zu einem einzelnen Sensor die doppelte Empfindlichkeit bei einer gleichzeitigen Erhöhung des Signal/Rausch-Abstandes um den Faktor $\sqrt{2}$.

Um eine noch weitere Verbesserung der Sensoreigenschaften, insbesondere der Empfindlichkeit bzw. des Signal/Rausch-Abstandes realisieren zu können, ist es erfindungsgemäß möglich, mehrere Sensorpaare der in Fig. 2 dargestellten Art auf einem Chip zu realisieren.

Es ist für Fachleute offensichtlich, daß die vorliegende Erfindung nicht ausschließlich für den in Fig. 1 dargestellten Kraft/Drehmomentsensor verwendbar ist, sondern in gleicher Weise für jeden denkbaren Sensor, bei dem das Ausgangssignal durch einen unerwünschten Hall-Effekt beeinflußt ist. Überdies ist es offensichtlich, daß die Mehrzahl von Sensorelementen gemäß der vorliegenden Erfindung auf einem gemeinsamen Träger oder alternativ auf unterschiedlichen Trägern angeordnet sein kann.

**Patentansprüche**

1.  Sensoranordnung zum Detektieren einer zu erfassenden Kraft oder eines zu erfassenden Drehmoments mit folgenden Merkmalen:

    zumindest zwei im wesentlichen gleichartigen Sensorelementen (30, 32), die jeweils ansprechend auf die zu erfassende Kraft oder das zu erfassende Drehmoment ein Ausgangssignal ($U_{S1}$, $U_{S2}$) erzeugen, wobei die Ausgangssignale einen durch ein Störmagnetfeld erzeugten Hall-Spannungsstöranteil ($U_{B1}$, $U_{B2}$) und einen durch die Kraft oder das Drehmoment erzeugten Signalanteil ($U_{K1}$, $U_{K2}$) aufweisen, wobei die beiden Sensorelemente (30, 32) um 90° gedreht zueinander angeordnet sind; und

    einer Einrichtung zur Subtraktion der beiden Ausgangssignale ($U_{S1}$, $U_{S2}$) zum Erzeugen eines Sensorsignals ($U_{ges}$), bei dem die Hall-Spannungsstöranteile ($U_{B1}$, $U_{B2}$) im wesentlichen kompensiert sind und die durch die Kraft oder das Drehmoment erzeugten Signalanteile ($U_{K1}$, $U_{K2}$) addiert sind.

2.  Sensoranordnung gemäß Anspruch 1, bei dem die beiden Sensorelemente (30, 32) auf einem gemeinsamen Träger angeordnet sind.

**3.** Sensoranordnung gemäß einem der Ansprüche 1 oder 2, bei der die Sensorelemente folgende Merkmale aufweisen:

ein mit einer Kraft oder einem Drehmoment beaufschlagbares Halbleitergebiet (10);

zwei Steuerelektroden (12, 14), die auf einer ersten und einer zweiten Seite des Halbleitergebiets (10), die sich beabstandet voneinander gegenüberliegen, angeordnet sind, wobei zwischen den Steuerelektroden ein Strom (20) durch das Halbleitergebiet erzeugbar ist;

zwei Sensorelektroden (16, 18), die auf einer dritten und auf einer vierten Seite des Halbleitergebiets (10), die sich beabstandet voneinander gegenüberliegen, angeordnet sind,

wobei eine auf das Halbleitergebiet (10) ausgeübte Kraft oder ein auf dasselbe ausgeübtes Drehmoment bei einem Stromfluß (20) zwischen den Steuerelektroden (12, 14) durch das Abgreifen einer zwischen den Sensorelektroden (16, 18) vorliegenden Spannung erfaßbar ist.

**4.** Sensoranordnung gemäß Anspruch 3, bei der die dritte und die vierte Seite des Halbleitergebiets (10) der Sensorelemente im wesentlichen senkrecht zu der ersten und der zweiten Seite angeordnet sind.

**5.** Sensoranordnung gemäß Anspruch 3 oder 4, bei der das Halbleitergebiet (10) der Sensorelemente dotiert ist.

**6.** Sensoranordnung gemäß Anspruch 3 oder 4, bei der das Halbleitergebiet (10) der Sensorelemente durch den Kanal eines Feldeffekttransistors gebildet ist, wobei die Drain- und die Source-Elektrode des Feldeffekttransistors die Steuerelektroden (12, 14) bilden.

**7.** Sensoranordnung gemäß einem der Ansprüche 3 bis 5, bei der ein Winkel ($\varphi$) zwischen der Dilationsrichtung des Halbleitergebiets und den gegenüberliegenden Seiten, auf denen die Steuerelektroden (12, 14) gebildet sind, im wesentlichen 45° beträgt.

**Claims**

**1.** A sensor arrangement for detecting a force to be measured or a torque to be measured, comprising the following features:

at least two substantially similar sensor elements (30, 32) which each produce an output signal ($U_{S1}$, $U_{S2}$) in response to the force to be measured or the torque to be measured, said output signals having a Hall voltage disturbance component ($U_{B1}$, $U_{B2}$) produced by a disturbing magnetic field and a signal component ($U_{K1}$, $U_{K2}$) produced by the force or the torque, the two sensor elements (30, 32) being arranged such that they are rotated by 90° relative to each other; and

a means for subtracting the two output signals ($U_{S1}$, $U_{S2}$) for producing a sensor signal ($U_{ges}$) in which the Hall voltage disturbance components ($U_{B1}$, $U_{B2}$) are substantially compensated and the signal components ($U_{K1}$, $U_{K2}$) produced by the force or the torque are added.

**2.** A sensor arrangement according to claim 1, wherein the two sensor elements (30, 32) are arranged on a common support.

**3.** A sensor arrangement according to one of the claims 1 or 2, wherein the sensor elements have the following features:

a semiconductor region (10) which is adapted to be acted upon by a force or a torque,

two control electrodes (12, 14) arranged on first and second spaced-apart, opposed sides of the semiconductor region (10), a current (20) flowing through said semiconductor region being producable between the control electrodes,

two sensor electrodes (16, 18) arranged on third and fourth spaced-apart, opposed sides of the semiconductor region (10),

wherein a force applied to the semiconductor region (10) or a torque applied to said semiconductor region is detectable, when there is a flow of current (20) between the control electrodes (12, 14), by tapping off a voltage existing between the sensor electrodes (16, 18).

**4.** A sensor arrangement according to claim 3, wherein the third and fourth sides of the semiconductor region (10) of the sensor elements are arranged substantially at right angles to said first and second sides.

**5.** A sensor arrangement according to claim 3 or 4, wherein the semiconductor region (10) of the sensor elements is doped.

**6.** A sensor arrangement according to claim 3 or 4, wherein the semiconductor region (10) of the sensor elements is defined by the channel of a field effect transistor, the drain and source electrodes of said field effect transistor defining the control electrodes (12, 14).

7. A sensor arrangement according to one of the claims 3 to 5, wherein an angle ( ) between the dilation direction of the semiconductor region and the opposed sides, on which the control electrodes (12, 14) are formed, is essentially 45°.

## Revendications

1. Aménagement de capteurs destiné à détecter une force à capter ou un couple à capter, aux caractéristiques suivantes :

   au moins deux éléments capteurs (30, 32) sensiblement identiques générant, chacun, un signal de sortie ($U_{S1}$, $U_{S2}$) en réaction à la force à capter ou au couple à capter, les signaux de sortie présentant une partie parasite de la tension de Hall ($U_{B1}$, $U_{B2}$) générée par un champ magnétique parasite et une partie de signal ($U_{K1}$, $U_{K2}$) générée par la force ou par le couple, les deux éléments capteurs (30, 32) étant disposés tournés de 90° l'un par rapport à l'autre ; et
   un dispositif de soustraction des deux signaux de sortie ($U_{S1}$, $U_{S2}$), pour générer un signal de capteur ($U_{ges}$) dans lequel les parties parasites de la tension de Hall ($U_{B1}$, $U_{B2}$) sont sensiblement compensées et les parties de signal ($U_{K1}$, $U_{K2}$) générées par la force ou par le couple sont additionnées.

2. Aménagement de capteurs suivant la revendication 1, dans lequel les deux éléments capteurs (30, 32) sont disposés sur un support commun.

3. Aménagement de capteurs suivant l'une des revendications 1 ou 2, dans lequel les éléments capteurs présentent les caractéristiques suivantes :

   une zone à semi-conducteur (10) pouvant être sollicitée par une force ou un couple ;
   deux électrodes de commande (12, 14) disposées sur un premier et un second côté, opposés et distants l'un de l'autre, de la zone à semi-conducteur (10), entre les électrodes de commande pouvant être généré un courant (20) dans la zone à semi-conducteur;
   deux électrodes de détection (16, 18) disposées sur un troisième et un quatrième côté, opposés et distants l'un de l'autre, de la zone à semi-conducteur (10),
   une force exercée sur la zone à semi-conducteur (10) ou un couple exercé sur cette dernière pouvant être saisi(e) à un flux de courant (20) entre les électrodes de commande (12, 14) en saisissant une tension présente entre les électrodes de détection (16, 18).

4. Aménagement de capteurs suivant la revendication 3, dans lequel les troisième et quatrième côtés de la zone à semi-conducteur (10) des éléments capteurs sont disposés sensiblement perpendiculairement aux premier et second côtés.

5. Aménagement de capteurs suivant la revendication 3 ou 4, dans lequel la zone à semi-conducteur (10) des éléments capteurs est dopée.

6. Aménagement de capteurs suivant la revendication 3 ou 4, dans lequel la zone à semi-conducteur (10) des éléments capteurs est formée par le canal d'un transistor à effet de champ, l'électrode de drain et l'électrode de source du transistor à effet de champ constituant les électrodes de commande (12, 14).

7. Aménagement de capteurs suivant l'une des revendications 3 à 5, dans lequel l'angle ($\varphi$) entre le sens de dilatation de la zone à semi-conducteur et les côtés opposés sur lesquels sont formées les électrodes de commande (12, 14) est sensiblement de 45°.

EP 1 060 360 B1

FIG.1

FIG.2